# EUROPEAN PATENT APPLICATION

(11) **EP 4 195 046 A1**
(43) Date of publication of application: **14.06.2023**
(21) Application number: 21868220.1
(22) Date of filing: 05.07.2021
(51) Int. Cl.: G06F 9/50, G06F 12/02

(54) **CACHE MEMORY ADJUSTMENT METHOD, APPARATUS, AND COMPUTER DEVICE**

(30) Priority: 17.09.2020 CN 202010981937
(71) Applicant: Shanghai Bilibili Technology Co., Ltd., Yangpu District Shanghai 200433 (CN)
(72) Inventor: WANG, Sheng, Shanghai 200433 (CN); CAI, Shangzhi, Shanghai 200433 (CN)
(74) Representative: Simmons & Simmons
(86) International application number: PCT/CN2021/104496
(87) International publication number: WO 2022/057391

(57) **Abstract**

The present application discloses a method and apparatus for adjusting cache memory and a computer device, where the method includes determining running memory in a current time period; determining free memory in the current time period based on the running memory and preset reserved memory; determining a current memory queue length based on the free memory and a preset memory block size; determining whether the current memory queue length is less than an initial memory queue length, wherein the initial memory queue length is a memory queue length corresponding to cache memory configured to cache non-system application data in a memory unit; setting the current memory queue length as a new initial memory queue length when the current memory queue length is less than the initial memory queue length; and releasing one or more memory blocks in the cache memory corresponding to a length by which the cache memory exceeds the new initial memory queue length. The present application further provides a computer-readable storage medium. The present application can effectively avoid a problem of a system crash caused by excessive data of files to be accessed being cached during running of more applications.

## Description

The present application claims priority to Chinese Patent Application No. 202010981937.7, filed with the China National Intellectual Property Administration on September 17, 2020, and entitled "METHOD AND APPARATUS FOR ADJUSTING CACHE MEMORY AND COMPUTER DEVICE", which is incorporated herein by reference in its entirety.

### Technical Field

The present application relates to the field of computer technologies, and in particular, to a method and apparatus for adjusting cache memory and a computer device.

### Background Art

Generally, common computer devices, such as a mobile phone, a tablet computer, a portable device, and a personal computer, and an electronic device such as a server, generally include a CPU and an internal memory. A central processing unit (CPU), as an operation and control core of a computer system, is a final execution unit for information processing and program running. The internal memory is also called a memory unit. The memory unit is directly connected to the CPU and has a small capacity but a high speed, and is configured to cache instructions and data of a currently running program and directly exchange information with the CPU.

The memory unit is generally configured to cache data generated when an application runs on the computer device, including process data of the application and necessary configuration data during input/output, that is, system application data; and cache cache data of some files to be accessed. For example, when a video is watched by running video playing software on a computer, the memory unit needs to cache: all data of a corresponding process during running of the video playing software; and cache data of a video file.

The inventors find that in the prior art, reserved memory is generally set up in the memory unit of the computer device, and is used to be released when system application data surges, to meet caching of the system application data. However, due to a capacity limitation of the memory unit, the memory unit of the computer device generally crashes when caching cache data of more files to be accessed and running more applications.

### Summary of the Invention

The present application provides a method and apparatus for adjusting cache memory and a computer device, which can solve a problem in the prior art that a memory unit easily crashes when caching data of more files to be accessed and running more applications.

First, in order to achieve the above objective, the present application provides a method for adjusting cache memory, including:
obtaining running memory in a current time period; calculating free memory in the current time period based on the running memory and preset reserved memory; calculating a current memory queue length based on the free memory and a preset memory block size;
determining whether the current memory queue length is less than an initial memory queue length, where the initial memory queue length is a memory queue length corresponding to cache memory used to cache non-system application data in a memory unit; and when the current memory queue length is less than the initial memory queue length, setting the current memory queue length as a new initial memory queue length, and releasing a memory block in the cache memory that corresponds to a length by which the cache memory exceeds the new initial memory queue length.

In an example, the obtaining running memory in a current time period includes: monitoring applications in a running state in the current time period, and obtaining occupied memory of each of the applications; and summing the occupied memory of all the applications to obtain the running memory.

In an example, the monitoring applications in a running state in the current time period, and obtaining occupied memory of each of the system programs includes: obtaining a system process table through a system application programming interface; and querying the system process table to find each application running in the current time period and corresponding occupied memory of the application.

In an example, the occupied memory of the application includes memory occupied by a process stack area and network socket cache.

In an example, calculating the current memory queue length based on the free memory and the preset memory block size includes: performing an integer division operation on the free memory and the memory block size to obtain the current memory queue length.

In an example, the releasing a memory block in the cache memory that corresponds to a length by which the cache memory exceeds the new initial memory queue length includes: calculating, based on the initial memory queue length L, the new initial memory queue length L', and the memory block size C, the number G of memory blocks required to be released, where G = (L-L')/C; and releasing the G memory blocks in the cache memory.

In an example, the releasing a memory block in the cache memory that corresponds to a length by which the cache memory exceeds the new initial memory queue length includes: obtaining the number of times data content in each memory block in the cache memory is accessed and/or a time at which the data content is last accessed and used; and releasing, based on a least recently used algorithm, the memory block in the cache memory that corresponds to a length by which the cache memory exceeds the new initial memory queue length.

In an example, when the current memory queue length is greater than the initial memory queue length, the current memory queue length is set as the new initial memory queue length.

In addition, in order to achieve the above objective, the present application further provides an apparatus for adjusting cache memory, including:
an obtaining module, configured to obtain running memory in a current time period; a first calculation module, configured to calculate free memory in the current time period based on the running memory and preset reserved memory; a second calculation module, configured to calculate a current memory queue length based on the free memory and a preset memory block size; a determining module, configured to determine whether the current memory queue length is less than an initial memory queue length, where the initial memory queue length is a memory queue length corresponding to cache memory used to cache non-system application data in the memory unit; and an adjustment module, configured to: when the current memory queue length is less than the initial memory queue length, set the current memory queue length as a new initial memory queue length, and release a memory block in the cache memory that corresponds to a length by which the cache memory exceeds the new initial memory queue length.

Further, the present application further provides a computer device, including a memory and a processor, where the memory stores computer-readable instructions capable of running on the processor, and when the computer-readable instructions are executed by the processor, the following steps are implemented:
obtaining running memory in a current time period; calculating free memory in the current time period based on the running memory and preset reserved memory; calculating a current memory queue length based on the free memory and a preset memory block size;
determining whether the current memory queue length is less than an initial memory queue length, where the initial memory queue length is a memory queue length corresponding to cache memory used to cache non-system application data in a memory unit; and when the current memory queue length is less than the initial memory queue length, setting the current memory queue length as a new initial memory queue length, and releasing a memory block in the cache memory that corresponds to a length by which the cache memory exceeds the new initial memory queue length.

Further, in order to achieve the above objective, the present application further provides a computer-readable storage medium storing computer-readable instructions, where the computer-readable instructions may be executed by at least one processor to cause the at least one processor to perform the following steps:
obtaining running memory in a current time period; calculating free memory in the current time period based on the running memory and preset reserved memory; calculating a current memory queue length based on the free memory and a preset memory block size;
determining whether the current memory queue length is less than an initial memory queue length, where the initial memory queue length is a memory queue length corresponding to cache memory used to cache non-system application data in a memory unit; and when the current memory queue length is less than the initial memory queue length, setting the current memory queue length as a new initial memory queue length, and releasing a memory block in the cache memory that corresponds to a length by which the cache memory exceeds the new initial memory queue length.

The method and apparatus for adjusting cache memory, the computer device, and the computer-readable storage medium provided in the present application can obtain running memory in a current time period; then calculate the current memory queue length based on the running memory, the preset reserved memory, and the preset memory block size; determine whether the current memory queue length is less than the initial memory queue length; and when the current memory queue length is less than the initial memory queue length, set the current memory queue length as the new initial memory queue length, and release the memory block in the cache memory that corresponds to a length by which the cache memory exceeds the new initial memory queue length. The running memory in the current time period is obtained, and the memory queue length of the cache memory in the memory unit is adjusted based on the running memory, thereby implementing that a capacity of the cache memory is limited based on the running memory, and avoiding a problem of a system crash caused by excessive data of files to be accessed being cached during running of more applications.

### Brief Description of the Drawings

FIG. 1 is a schematic diagram of an application environment according to an embodiment of the present application;
FIG. 2 is a schematic flowchart of a method for adjusting cache memory according to a specific embodiment of the present application;
FIG. 3 is a schematic flowchart of a specific embodiment of step S208 in FIG. 2;
FIG. 4 is an effect diagram of an exemplary example of releasing a memory block based on a least recently used algorithm according to the present application;
FIG. 5 is a schematic diagram of program modules of an apparatus for adjusting cache memory according to an embodiment of the present application; and
FIG. 6 is a schematic diagram of an optional hardware architecture of a computer device according to the present application.

### Detailed Description of Embodiments

To make the objectives, technical solutions, and advantages of the present application clearer and more comprehensible, the present application will be further described in detail with reference to the accompanying drawings and embodiments. It should be understood that the specific embodiments described herein are merely intended to explain the present application, and are not intended to limit the present application. All other embodiments obtained by those of ordinary skill in the art based on the embodiments of the present application without creative efforts shall fall within the protection scope of the present application.

It should be noted that the descriptions related to "first", "second", etc. in the present application are merely used for the illustrative purpose, and should not be construed as indicating or implying the relative importance thereof or implicitly indicating the number of technical features indicated. Thus, features defined with "first" and "second" may explicitly or implicitly include at least one of the features. In addition, technical solutions of various embodiments can be combined with each other, but they must be based on the implementation by those of ordinary skill in the art. When a combination of technical solutions is contradictory or cannot be implemented, it should be considered that such a combination of the technical solutions neither exists, nor falls within the protection scope claimed by the present application.

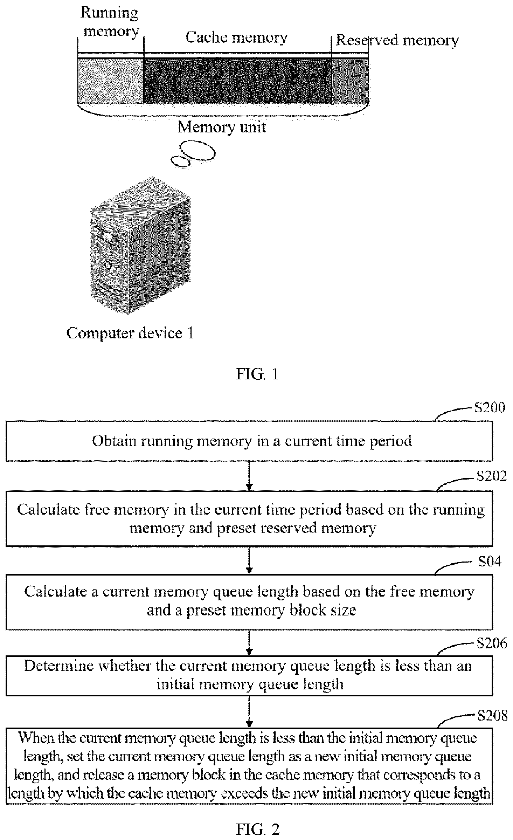

FIG. 1 is a schematic diagram of an application environment according to an embodiment of the present application. Referring to FIG. 1, the computer device 1 includes a memory unit. The memory unit includes reserved memory, cache memory, and running memory. The reserved memory is set to a fixed capacity, for example, the capacity of the reserved memory is 10% of a capacity of the memory unit. The running memory refers to a memory capacity occupied during running of all applications on the computer device 1 within a specific time period, for example, within one second, or within two milliseconds. The cache memory is preset with a specific capacity. In a specific embodiment, based on previous usage of the running memory of the memory unit, the computer device 1 may set a memory capacity obtained by subtracting the reserved memory and the running memory from the capacity of the memory unit as a capacity of the cache memory for caching files to be accessed.

In this embodiment, the computer device 1 can periodically perform the following steps: obtaining running memory in a current time period; then calculating a current memory queue length based on the running memory, the preset reserved memory, and a preset memory block size; then determining whether the current memory queue length is less than an initial memory queue length; and when the current memory queue length is less than the initial memory queue length, setting the current memory queue length as a new initial memory queue length, and releasing a memory block in the cache memory that corresponds to a length by which the cache memory exceeds the new initial memory queue length, so as to implement dynamic adjustment of the capacity of the cache memory in the memory unit, and avoid a system crash caused by excessive data cached in the memory unit. In this embodiment, the computer device 1 may be used as an electronic device such as a mobile phone, a tablet computer, a portable device, a personal computer (PC), or a server; or may be used as an independent function module and attached to the electronic device to implement a function of adjusting the cache memory.

### Embodiment 1

FIG. 2 is a schematic flowchart of a method for adjusting cache memory according to an embodiment of the present application. It may be understood that the flowchart in this method embodiment is not intended to limit an execution sequence of the steps. Exemplary description is made below by using the computer device 1 as the executor.

As shown in FIG. 2, the method for adjusting cache memory may include steps S200 to S208.

In step S200, running memory in a current time period is obtained.

At present, in many scenarios, part of memory in a memory unit needs to be set as cache memory to cache file data. For example, in the video service industry, because a video service is a server program that provides video online, a video file is stored on a disk of the server, and a user downloads video content through a network to implement a function of playing an online video for the user. However, as rich media, the video file itself has high requirements for network input/output and service quality of the server. Therefore, a video server generally uses the memory to cache the video content, thereby improving the service quality of the video server side. In such a case, the computer device 1 may be regarded as the video server, and the cache data may be video data to be played. Therefore, it is necessary for the computer device 1 to manage the cache memory.

In this embodiment, the computer device 1 can periodically monitor the usage of running memory of the memory unit within a preset time period, and then obtain the running memory within the time period. Therefore, when the cache memory needs to be adjusted, the running memory in the current time period may be obtained for calculating free memory. In this embodiment, obtaining, by the computer device 1, the running memory in the current time period includes: monitoring applications in a running state in the current time period, and obtaining occupied memory of each of the applications; and summing the occupied memory of all the applications to obtain the running memory. The monitoring applications in a running state in the current time period, and obtaining occupied memory of each of the system programs includes: obtaining a system process table through a system application programming interface; and querying the system process table to find each application running in the current time period and corresponding occupied memory of the application.

In this embodiment, an operating system of the computer device 1 provides a system application programming interface, through the system application programming interface, running states including running or stopping running of all applications and a resource occupied by each running application may be monitored. In addition, after the above information is obtained, the information may also be stored in the form of a system process table. Therefore, if the computer device 1 needs to obtain the applications in the running state, the computer device 1 may directly obtain the system process table through the system application programming interface, and then query the system process table to find each application running in the current time period and corresponding occupied memory of the application. Certainly, the occupied memory of the application includes memory occupied by a process stack area and network socket cache, where the network socket cache includes cache for data (sent but not confirmed to be sent successfully) actually transmitted in a network and cache for processing control information between protocols.

In step S202, free memory in the current time period is calculated based on the running memory and preset reserved memory.

In step S204, a current memory queue length is calculated based on the free memory and a preset memory block size.

Specifically, after obtaining the running memory, the computer device 1 further calculates the free memory in the current time period based on the running memory and the preset reserved memory, and then calculates the current memory queue length based on the free memory and the preset memory block size. In this embodiment, the computer device 1 obtains a capacity of the free memory in the current time period by subtracting a capacity of the running memory and a capacity of the reserved memory from a capacity of the memory unit; then calculates the memory queue length that may be available in the free memory based on the preset memory block size, where calculating, by the computer device 1, the current memory queue length based on the free memory and the preset memory block size includes: performing an integer division operation on the free memory and the memory block size to obtain the current memory queue length.

For example, a size of the memory unit of the computer device 1 is S, a size of the reserved memory is fixed to R, and it is assumed that R = 10%* S; the running memory may be obtained through the system application programming interface, for example, may be M; therefore, the free memory N = S - R - M; and then the current memory queue length L = N/C (rounded) that may be used to set the cache memory may be calculated, where C is the preset memory block size.

In step S206, whether the current memory queue length is less than an initial memory queue length is determined, where the initial memory queue length is a memory queue length corresponding to the cache memory used to cache non-system application data in the memory unit.

In step S208, when the current memory queue length is less than the initial memory queue length, the current memory queue length is set as a new initial memory queue length, and a memory block in the cache memory that corresponds to a length by which the cache memory exceeds the new initial memory queue length is released.

Specifically, after calculating the current memory queue length, the computer device 1 compares the current memory queue length with the preset initial memory queue length. In this embodiment, the initial memory queue length is a memory queue length corresponding to the cache memory that is set in the memory unit by the computer device 1 and used to cache non-system application data. For example, the computer device 1 sets, based on previous usage of the running memory, the cache memory to cache the non-system application data, such that the memory queue length included in the cache memory is set as the initial memory queue length.

The computer device 1 compares the current memory queue length with the initial memory queue length; when the current memory queue length is less than the initial memory queue length, sets the current memory queue length as the new initial memory queue length, and releases the memory block in the cache memory that corresponds to a length by which the cache memory exceeds the new initial memory queue length. In a specific embodiment, releasing, by the computer device 1, the memory block in the cache memory that corresponds to a length by which the cache memory exceeds the new initial memory queue length includes: calculating, based on the initial memory queue length L, the new initial memory queue length L', and the memory block size C, the number G of memory blocks required to be released, where G = (L-L')/C; and releasing the G memory blocks in the cache memory.

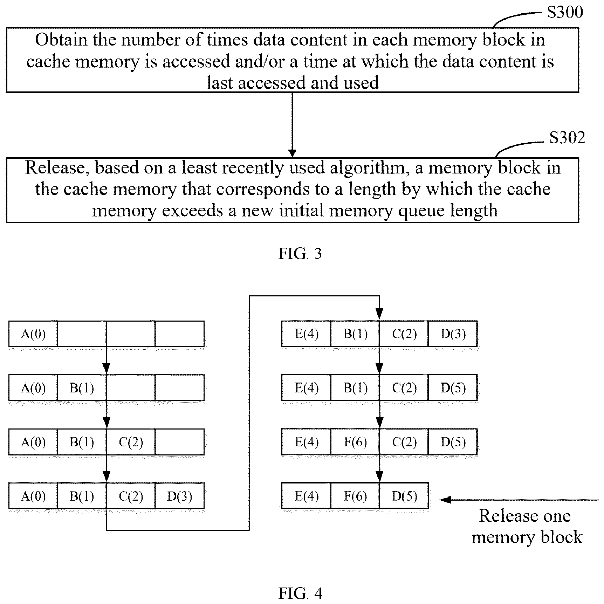

As shown in FIG. 3, in an exemplary embodiment, releasing, by the computer device 1, the memory block in the cache memory that corresponds to a length by which the cache memory exceeds the new initial memory queue length includes steps S300 to S302.

In step S300, the number of times data content in each memory block in the cache memory is accessed and/or a time at which the data content is last accessed and used are obtained.

In step S302, the memory block in the cache memory that corresponds to a length by which the cache memory exceeds the new initial memory queue length is released based on a least recently used algorithm.

In this embodiment, the computer device 1 collects statistics on the number of times data content in each memory block in the cache memory is accessed and/or the time at which the data content is last accessed and used, and then performs last-elimination based on the least recently used algorithm to obtain data content that should be released; and then releases the memory block caching the data content.

FIG. 4 is an effect diagram of an exemplary example of releasing a memory block based on a least recently used algorithm according to the present application. As shown in FIG. 4, the initial memory queue length included in the cache memory set up by the computer device 1 includes four memory blocks; then along the directions of arrows, the computer device 1 sequentially caches data of a file to be accessed into these four memory blocks, and the cached content is marked in a caching order: in A (0), B (1), C (2), D (3), E (4), D (5) and F (6), serial numbers in the round brackets represent the sequential order, and A, B, C, D, E, and F represent cache content. Since there are only four memory blocks, the computer device 1 caches, based on the least recently used algorithm, the data of the file to be accessed. For example, when E is cached, among the cached A (0), B (1), C (2) and D (3), A (0) is first cached, that is, A (0) has not been used recently, and therefore, A (0) will be cleared to free up cache space for caching E.

Then, when the computer device 1 executes the method for adjusting cache memory according to the present application, and determines that the current memory queue length is less than the initial memory queue length, the computer device 1 sets the current memory queue length as the new initial memory queue length, and releases the memory block in the cache memory that corresponds to a length by which the cache memory exceeds the new initial memory queue length. For example, if the original initial memory queue length includes four memory blocks, and the new initial memory queue length is three memory blocks, the computer device 1 releases one memory block, and the memory block that needs to be released is also selected based on the least recently used algorithm. As shown in FIG. 4, for E (4), F (6), C (2), and D (5), where C (2) is first cached, that is, C (2) is has not been used recently, and therefore the computer device 1 releases the memory block that caches C (2).

Certainly, in other embodiments, the computer device 1 may also perform ranking based on popularity of video data in each memory block in the cache memory, for example, calculate the popularity of the video data based on the number of views, comments, and/or number of likes of a user and perform ranking; and then release the memory block corresponding to the video data whose popularity ranks last.

In another specific embodiment, when the computer device 1 determines that the current memory queue length is greater than the initial memory queue length, the computer device 1 may further set the current memory queue length as the new initial memory queue, thereby increasing the size of the cache memory for caching non-system application data, so that more temporary data may be cached, and the memory usage rate is improved. Therefore, the computer device 1 may dynamically adjust the memory queue length of the cache memory based on the size of the free memory in each time period, thereby effectively improving the memory usage efficiency.

To sum up, the method for adjusting cache memory provided in the embodiment can obtain the running memory in the current time period; then calculate the current memory queue length based on the running memory, the preset reserved memory, and the preset memory block size; determine whether the current memory queue length is less than the initial memory queue length; and when the current memory queue length is less than the initial memory queue length, set the current memory queue length as the new initial memory queue length, and release the memory block in the cache memory that corresponds to a length by which the cache memory exceeds the new initial memory queue length. The running memory in the current time period is obtained, and the memory queue length of the cache memory in the memory unit is adjusted based on the running memory, thereby implementing that a capacity of the cache memory is limited based on the running memory, and avoiding a problem of a system crash caused by excessive data of files to be accessed being cached during running of more applications.

In other words, the computer device 1 can make full use of the memory unit, and increase the cache memory when the memory occupied by the application is at a valley value, thereby increasing a hit rate of the memory. When the memory occupied by the application is at a peak value, the cache memory is released, and more memory capacity is allocated to the running memory, thereby improving network packet processing of the system. Regardless of a traffic situation, crash problems such as application abortion or exit due to insufficient memory can be avoided.

### Embodiment 2

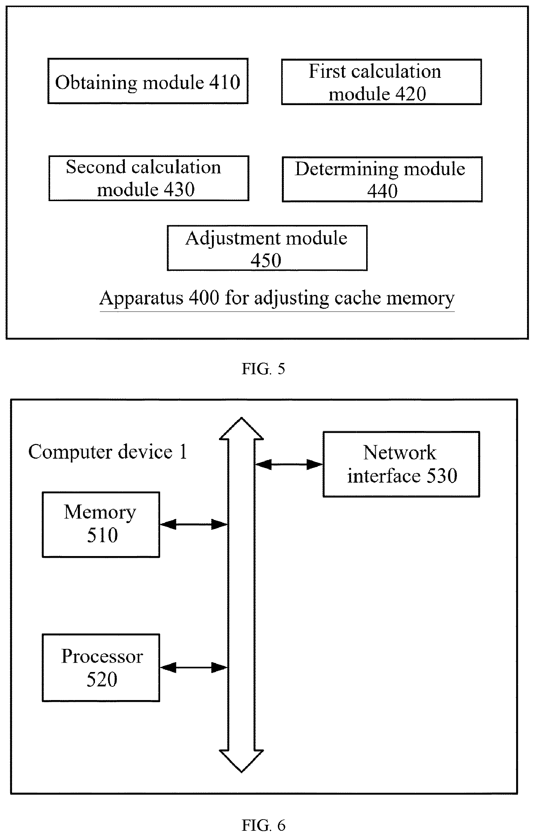

FIG. 5 is a block diagram schematically showing an apparatus for adjusting cache memory according to Embodiment 2 of the present application. The apparatus for adjusting cache memory may be divided into one or more program modules, and the one or more program modules are stored in a storage medium and executed by one or more processors to implement the embodiments of the present application. The program modules referred to in the embodiments of the present application refer to a series of computer-readable instruction segments that can complete a specific function. The functions of various program modules in the embodiments will be specifically described in the following descriptions.

As shown in FIG. 5, the apparatus 400 for adjusting cache memory may include an obtaining module 410, a first calculation module 420, a second calculation module 430, a determining module 440, and an adjustment module 450.

The obtaining module 410 is configured to obtain running memory in a current time period.

The first calculation module 420 is configured to calculate free memory in the current time period based on the running memory and preset reserved memory.

The second calculation module 430 is configured to calculate a current memory queue length based on the free memory and a preset memory block size.

The determining module 440 is configured to determine whether the current memory queue length is less than an initial memory queue length, where the initial memory queue length is a memory queue length corresponding to cache memory used to cache non-system application data in the memory unit.

The adjustment module 450 is configured to: when the current memory queue length is less than the initial memory queue length, set the current memory queue length as a new initial memory queue length, and release a memory block in the cache memory that corresponds to a length by which the cache memory exceeds the new initial memory queue length.

In an exemplary embodiment, the obtaining module 410 is further configured to: monitor applications in a running state in the current time period, and obtain occupied memory of each of the applications; sum the occupied memory of all the applications to obtain the running memory; obtain a system process table through a system application programming interface; and query the system process table to find each application running in the current time period and corresponding occupied memory of the application, where the occupied memory of the application includes memory occupied by a process stack area and network socket cache.

In an exemplary embodiment, the second calculation module 430 is further configured to: perform an integer division operation on the free memory and the memory block size to obtain the current memory queue length.

In an exemplary embodiment, the adjustment module 450 is further configured to: calculate, based on the initial memory queue length L, the new initial memory queue length L', and the memory block size C, the number G of memory blocks required to be released, where G = (L-L')/C; release the G memory blocks in the cache memory; obtain the number of times data content in each memory block in the cache memory is accessed and/or a time at which the data content is last accessed and used; and release, based on a least recently used algorithm, the memory block in the cache memory that corresponds to a length by which the cache memory exceeds the new initial memory queue length.

In an exemplary embodiment, the adjustment module 450 is further configured to: when the current memory queue length is greater than the initial memory queue length, set the current memory queue length as the new initial memory queue length.

### Embodiment 3

FIG. 6 is a schematic diagram schematically showing a hardware architecture of a computer device 1 adapted to implement a method for adjusting cache memory according to Embodiment 3 of the present application. In this embodiment, the computer device 1 is a device that can automatically perform numerical calculation and/or information processing according to preset or prestored instructions. For example, the computer device 1 may be a rack server, a blade server, a tower server, or a cabinet server having a gateway function (including an independent server or a server cluster composed of a plurality of servers), or the like. As shown in FIG. 6, the computer device 1 at least includes, but is not limited to: a memory 510, a processor 520, and a network interface 530, which may be communicatively linked to each other by using a system bus.

The memory 510 includes at least one type of computer-readable storage medium, and the readable storage medium includes a flash memory, a hard disk, a multimedia card, a card-type memory (for example, an SD or DX memory), a random access memory (RAM), a static random access memory (SRAM), a read-only memory (ROM), an electrically erasable programmable read-only memory (EEPROM), a programmable read-only memory (PROM), a magnetic memory, a magnetic disk, an optical disc, and the like. In some embodiments, the memory 510 may be an internal storage module of the computer device 1, for example, a hard disk or memory of the computer device 1. In some other embodiments, the memory 510 may alternatively be an external storage device of the computer device 1, for example, a plug-in type hard disk equipped on the computer device 1, a smart media card (SMC for short), a secure digital (SD for short) card, or a flash card. Certainly, the memory 510 may alternatively include both the internal storage module of the computer device 1 and the external storage device of the computer device. In this embodiment, the memory 510 is generally configured to store an operating system and various types of application software installed on the computer device 1, such as program code for the method for adjusting cache memory. In addition, the memory 510 may be further configured to temporarily store various types of data that have been output or are to be output.

The processor 520 may be, in some embodiments, a central processing unit (CPU for short), a controller, a microcontroller, a microprocessor, or other data processing chips. The processor 520 is generally configured to control overall operation of the computer device 1, for example, execute control, processing, and the like related to data exchange or communication with the computer device 1. In this embodiment, the processor 520 is configured to run program code stored in the memory 510 or to process data.

The network interface 530 may include a wireless network interface or a wired network interface. The network interface 530 is generally configured to establish a communication link between the computer device 1 and other computer devices. For example, the network interface 530 is configured to connect the computer device 1 to an external terminal by using a network, and establish a data transmission channel, a communication link, and the like between the computer device 1 and the external terminal. The network may be a wireless or wired network, such as Intranet, Internet, the Global System for Mobile Communications (GSM for short), wideband code division multiple access (WCDMA for short), a 4G network, a 5G network, Bluetooth, or Wi-Fi.

It should be noted that FIG. 6 shows only a computer device having components 510 to 530, but it should be understood that not all of the illustrated components are required to be implemented, and more or fewer components may be implemented instead.

In this embodiment, the program code for the method for adjusting cache memory that is stored in the memory 510 may alternatively be divided into one or more program modules and executed by one or more processors (the processor 520 in this embodiment) to implement the embodiments of the present application.

### Embodiment 4

This embodiment further provides a computer-readable storage medium having stored thereon computer-readable instructions, where when the computer-readable instructions are executed by a processor, the following steps are implemented:
obtaining running memory in a current time period; calculating free memory in the current time period based on the running memory and preset reserved memory; calculating a current memory queue length based on the free memory and a preset memory block size;
determining whether the current memory queue length is less than an initial memory queue length, wherein the initial memory queue length is a memory queue length corresponding to cache memory used to cache non-system application data in a memory unit; and when the current memory queue length is less than the initial memory queue length, set the current memory queue length as the new initial memory queue length, and release the memory block in the cache memory that corresponds to a length by which the cache memory exceeds the new initial memory queue length.

In this embodiment, the computer-readable storage medium includes a flash memory, a hard disk, a multimedia card, a card-type memory (for example, an SD or DX memory), a random access memory (RAM), a static random access memory (SRAM), a read-only memory (ROM), an electrically erasable programmable read-only memory (EEPROM), a programmable read-only memory (PROM), a magnetic memory, a magnetic disk, an optical disc, and the like. In some embodiments, the computer-readable storage medium may be an internal storage unit of the computer device, for example, a hard disk or memory of the computer device. In some other embodiments, the computer-readable storage medium may alternatively be an external storage device of the computer device, for example, a plug-in type hard disk equipped on the computer device, a smart media card (SMC for short), a secure digital (SD for short) card, or a flash card. Certainly, the computer-readable storage medium may alternatively include both the internal storage unit of the computer device and the external storage device of the computer device. In this embodiment, the computer-readable storage medium is generally configured to store an operating system and various types of application software installed on the computer device, such as program code for the method for adjusting cache memory in the embodiments. In addition, the computer-readable storage medium may be configured to temporarily store various types of data that have been output or are to be output.

It will be apparent to those skilled in the art that the various modules or steps in the embodiments of the present application can be implemented by a general-purpose computing apparatus that can be centralized on a single computing apparatus or distributed across a network formed by a plurality of computing apparatuses. Optionally, they may be implemented by program code executable by the computing apparatus, such that they may be stored in a storage apparatus and executed by the computing apparatus, and in some cases, the steps shown or described may be performed in a sequence different from the sequence described herein, or they may be respectively fabricated into individual integrated circuit modules, or a plurality of modules or steps thereof may be implemented as a single integrated circuit module. In this way, the embodiments of the present application are not limited to any specific combination of hardware and software.

The foregoing descriptions are merely preferred embodiments of the embodiment of the present application, and are not intended to limit the patent scope of the embodiment of present application. Any transformation of equivalent structures or equivalent processes that is made using the contents of the description and accompanying drawings of the embodiment of present application, or any direct or indirect application thereof in other related technical fields shall equally fall within the patent protection scope of the embodiment of present application.

## Claims

1. A method for adjusting cache memory, comprising:
determining running memory in a current time period;
determining free memory in the current time period based on the running memory and preset reserved memory;
determining a current memory queue length based on the free memory and a preset memory block size;
determining whether the current memory queue length is less than an initial memory queue length, wherein the initial memory queue length is a memory queue length corresponding to cache memory configured to cache non-system application data in a memory unit; setting the current memory queue length as a new initial memory queue length when the current memory queue length is less than the initial memory queue length; and
releasing one or more memory blocks in the cache memorycorresponding to a length by which the cache memory exceeds the new initial memory queue length.

2. The method for adjusting cache memory according to claim 1, wherein the determining running memory in a current time period comprises:
monitoring applications in a running state in the current time period, and obtaining memory occupied by each of the applications; and
determining the running memory by summing the memory occupied by each of the applications.

3. The method for adjusting cache memory according to claim 2, wherein the monitoring applications in a running state in the current time period, and obtaining memory occupied by each of the applications comprises:
obtaining a system process table through a system application programming interface; and
identifying each of the applications running in the current time period and obtaining occupied memory corresponding to each of the applications by querying the system process table.

4. The method for adjusting cache memory according to claim 2 or 3, wherein the memory occupied by each of the applications comprises memory occupied by a process stack area and network socket cache.

5. The method for adjusting cache memory according to any one of claims 1 to 4, wherein the determining a current memory queue length based on the free memory and a preset memory block size comprises:
determining the current memory queue length by performing an integer division operation on the free memory and the memory block size.

6. The method for adjusting cache memory according to any one of claims 1 to 5, wherein the releasing one or more memory blocks in the cache memory corresponding to a length by which the cache memory exceeds the new initial memory queue length comprises:
determining a number G of memory block to be released based on the initial memory queue length L, the new initial memory queue length L', and the preset memory block size C, wherein the number G is determined based on a formula G = (L-L')/C; and
releasing G memory blocks in the cache memory.

7. The method for adjusting cache memory according to claim 1 or 6, wherein the releasing one or more memory blocks in the cache memory corresponding to a length by which the cache memory exceeds the new initial memory queue length comprises:
obtaining a number of times of accessing data content in each memory block in the cache memory and/or a most recent time point at which the data content is accessed and used; and
releasing, based on a least recently used algorithm, the one or more memory blocks in the cache memory corresponding to a length by which the cache memory exceeds the new initial memory queue length.

8. The method for adjusting cache memory according to any one of claims 1 to 7, wherein when the current memory queue length is greater than the initial memory queue length, the current memory queue length is set as the new initial memory queue length.

9. An apparatus for adjusting cache memory, including:
an obtaining module, configured to obtain running memory in a current time period;
a first calculation module, configured to determine free memory in the current time period based on the running memory and preset reserved memory;
a second calculation module, configured to determine a current memory queue length based on the free memory and a preset memory block size;
a determining module, configured to determine whether the current memory queue length is less than an initial memory queue length, where the initial memory queue length is a memory queue length corresponding to cache memory configured to cache non-system application data in the memory unit; and
an adjustment module, configured to: when the current memory queue length is less than the initial memory queue length, set the current memory queue length as a new initial memory queue length, and release a memory block in the cache memory, the released memory block corresponding to a length by which the cache memory exceeds the new initial memory queue length.

10. A computer device, comprising a memory and a processor, wherein the memory stores computer-readable instructions executable by the processor, and when the computer-readable instructions are executed by the processor, the processor implement operations comprising:
determining running memory in a current time period;
determining free memory in the current time period based on the running memory and preset reserved memory;
determining a current memory queue length based on the free memory and a preset memory block size;
determining whether the current memory queue length is less than an initial memory queue length, wherein the initial memory queue length is a memory queue length corresponding to cache memory configured to cache non-system application data in a memory unit;
setting the current memory queue length as a new initial memory queue length when the current memory queue length is less than the initial memory queue length; and
releasing a memory block in the cache memory, the released memory block corresponding to a length by which the cache memory exceeds the new initial memory queue length.

11. The computer device according to claim 10,
wherein the determining running memory in a current time period comprises:
monitoring applications in a running state in the current time period, and obtaining occupied memory of each of the applications, and
determining the running memory by summing the memory occupied by each of the applications;
wherein the monitoring applications in a running state in the current time period, and obtaining memory occupied by each of the applications comprises:
obtaining a system process table through a system application programming interface, and
identifying each of the applications running in the current time period and obtaining occupied memory corresponding to each of the applications by querying the system process table; and
wherein the memory occupied by each of the applications comprises memory occupied by a process stack area and network socket cache.

12. The computer device according to claim 10 or 11, wherein the determining a current memory queue length based on the free memory and a preset memory block size comprises:
determining the current memory queue length by performing an integer division operation on the free memory and the memory block size.

13. The computer device according to any one of claims 10 to 12, wherein the releasing one or more memory blocks in the cache memory corresponding to a length by which the cache memory exceeds the new initial memory queue length comprises:
determining a number G of memory block to be released based on the initial memory queue length L, the new initial memory queue length L', and the preset memory block size C, wherein the number G is determined based on a formula G = (L-L')/C, and
releasing G memory blocks in the cache memory; and/or
obtaining a number of times of accessing data content in each memory block in the cache memory and/or a most recent time point at which the data content is accessed and used, and
releasing, based on a least recently used algorithm, the one or more memory blocks in the cache memory corresponding to a length by which the cache memory exceeds the new initial memory queue length.

14. The computer device according to any one of claims 10 to 13, wherein when the current memory queue length is greater than the initial memory queue length, the current memory queue length is set as the new initial memory queue length.

15. A computer-readable storage medium storing computer-readable instructions, execution of the computer-readable instructions by at least one processor causes the at least one processor to perform operations comprising:
determining running memory in a current time period;
determining free memory in the current time period based on the running memory and preset reserved memory;
determining a current memory queue length based on the free memory and a preset memory block size;
determining whether the current memory queue length is less than an initial memory queue length, wherein the initial memory queue length is a memory queue length corresponding to cache memory configured to cache non-system application data in a memory unit;
setting the current memory queue length as a new initial memory queue length when the current memory queue length is less than the initial memory queue length; and
releasing one or more memory blocks in the cache memory corresponding to a length by which the cache memory exceeds the new initial memory queue length.

16. The computer-readable storage medium according to claim 15,
wherein the determining running memory in a current time period comprises:
monitoring applications in a running state in the current time period, and obtaining occupied memory of each of the applications, and
determining the running memory by summing the memory occupied by each of the applications;
wherein the monitoring applications in a running state in the current time period, and obtaining memory occupied by each of the applications comprises:
obtaining a system process table through a system application programming interface, and
identifying each of the applications running in the current time period and obtaining occupied memory corresponding to each of the applications by querying the system process table; and
wherein the memory occupied by each of the applications comprises memory occupied by a process stack area and network socket cache.

17. The computer-readable storage medium according to claim 15 or 16, wherein the determining a current memory queue length based on the free memory and a preset memory block size comprises:
determining the current memory queue length by performing an integer division operation on the free memory and the memory block size.

18. The computer-readable storage medium according to any one of claims 15 to 17, wherein the releasing one or more memory blocks in the cache memory corresponding to a length by which the cache memory exceeds the new initial memory queue length comprises:
determining a number G of memory block to be released based on the initial memory queue length L, the new initial memory queue length L', and the preset memory block size C, wherein the number G is determined based on a formula G = (L-L')/C; and
releasing G memory blocks in the cache memory.

19. The computer-readable storage medium according to claim 15 or 18, wherein the releasing one or more memory blocks in the cache memory corresponding to a length by which the cache memory exceeds the new initial memory queue length comprises:
obtaining a number of times of accessing data content in each memory block in the cache memory and/or a most recent time point at which the data content is accessed and used; and
releasing, based on a least recently used algorithm, the one or more memory blocks in the cache memory corresponding to a length by which the cache memory exceeds the new initial memory queue length.

20. The computer-readable storage medium according to any one of claims 15 to 19, wherein when the current memory queue length is greater than the initial memory queue length, the current memory queue length is set as the new initial memory queue length.
